Europäisches Patentamt

**European Patent Office**

**Office européen des brevets**

(19)

(11) Numéro de publication: **0 113 631**
**A2**

(12)

# DEMANDE DE BREVET EUROPEEN

(21) Numéro de dépôt: **83402531.4**

(22) Date de dépôt: **23.12.83**

(51) Int. Cl.³: **B 29 C 17/07**
**F 42 B 7/00**

(30) Priorité: **07.01.83 CH 97/83**

(43) Date de publication de la demande:
**18.07.84 Bulletin 84/29**

(84) Etats contractants désignés:
**BE CH DE FR GB IT LI SE**

(71) Demandeur: **CHEDDITE FRANCE**
**99, route de Lyon**
**F-26501 Bourg les Valence(FR)**

(72) Inventeur: **Miglia, Andrea**
**Via Roma 379**
**Collegalvetti(IT)**

(74) Mandataire: **Corre, Jacques Denis Paul et al,**
**Cabinet Regimbeau 26, Avenue Kléber**
**F-75116 Paris(FR)**

(54) **Procédé de fabrication de bourres de plastique monobloc pour cartouches.**

(57) La bourre de plastique monobloc (13) employée pour la fabrication de cartouches à plombs est d'abord préformée par extrusion au moyen d'une filière (1) pour donner une paraison (6) qui est ensuite finalement mise en forme dans un moule par soufflage (7a'7b) au moyen d'air comprimé. L'air comprimé est introduit au moyen d'une aiguille (8) à travers le moule de soufflage à l'intérieur de la paraison (6). Ceci rend superflu le moule d'injection coûteux nécessaire jusqu'à maintenant et, en outre, le procédé peut être réalisé en continu.

Fig. 1

Procédé de fabrication de bourres de plastique monobloc

pour cartouches

La présente invention concerne un procédé de fabrication de bourres de plastique monobloc pour cartouches, en particulier les cartouches à plombs, chaque bourre comprenant une gaine qui est destinée à recevoir la poudre, une coupelle à plombs servant à recevoir les plombs et un amortisseur disposé entre la gaine et la coupelle à plombs. L'invention concerne aussi la bourre de plastique monobloc fabriquée par ce procédé.

Les familiers de la technique savent que de telles bourres de plastique, utilisées pour la production de cartouches, sont fabriquées par le procédé de moulage par injection. En comparaison des pièces à fabriquer, les moules requis à cette fin doivent être relativement grands et sont donc également coûteux. En outre, le procédé de moulage par injection prend beaucoup de temps et ne peut être réalisé en continu.

Le but de la présente invention est donc de proposer un procédé qui ne se contente pas de simplifier considérablement le procédé employé jusqu'à maintenant mais qui rende aussi possible l'emploi de moules sensiblement plus simples et une production en continu. Ce nouveau procédé est caractérisé en ce que l'on forme d'abord une paraison par extrusion et on lui donne ensuite la forme finale désirée par moulage par soufflage puis on la refroidit.

Selon une autre caractéristique de ce procédé, la pareison formée par extrusion est déplacée en continu pendant l'étape de moulage par soufflage et le moule de soufflage entourant la pareison dans la zone de formage est déplacé en même temps que la paraison et replacé dans sa position de départ après la fin de l'étape de moulage par soufflage et après refroidissement.

Selon une autre caractéristique de ce procédé, du gaz sous pression est envoyé dans la paraison, introduit dans le moule de soufflage, en deux points situés à une distance commune dans la direction axiale de la paraison, de telle manière que la connexion entre la gaine à poudre et la coupelle à plombs puisse être hermétiquement fermée, même pendant l'étape de moulage par soufflage et qu'une fermeture ultérieure devienne superflue.

Selon encore une autre caractéristique de ce procédé, on applique un vide sur la surface externe de la paraison située à l'intérieur du moule de soufflage et la paraison se trouve ainsi appuyée contre les contours du moule de soufflage par la pression gazeuse régnant à l'intérieur de la paraison.

La bourre de plastique monobloc fabriquée par ce procédé est caractérisée en ce que l'amortisseur est un corps creux pratiquement fermé rempli d'air.

Selon une autre caractéristique de cette bourre de plastique, la connexion entre la gaine et la coupelle à plombs est interrompue par un joint étanche en au moins un point situé entre ces deux éléments.

Selon une autre caractéristique de cette bourre de plastique, le corps creux possède une face extrême servant de membrane souple, faisant face à la gaine, et une faisant face à la coupelle à plombs, chacune des faces extrêmes étant reliée, respectivement, à la gaine et à la coupelle à plombs par l'intermédiaire d'un élément de jonction de diamètre plus faible, l'élément de jonction adjacent à la gaine étant soudé hermétiquement.

L'illustration d'une réalisation de l'objet de l'invention est décrite ci-dessous, en se référant au dessin annexé dans lequel:

La figure 1 est une représentation en coupe du dispositif utilisé pour l'extrusion de la paraison et pour le moulage par soufflage de la bourre,

La figure 2 illustre schématiquement un procédé de fabrication en continu et

Les figures 3 et 4 représentent, en vue perspective schématique, deux réalisations possibles d'une bourre fabriquée par le procédé selon l'invention.

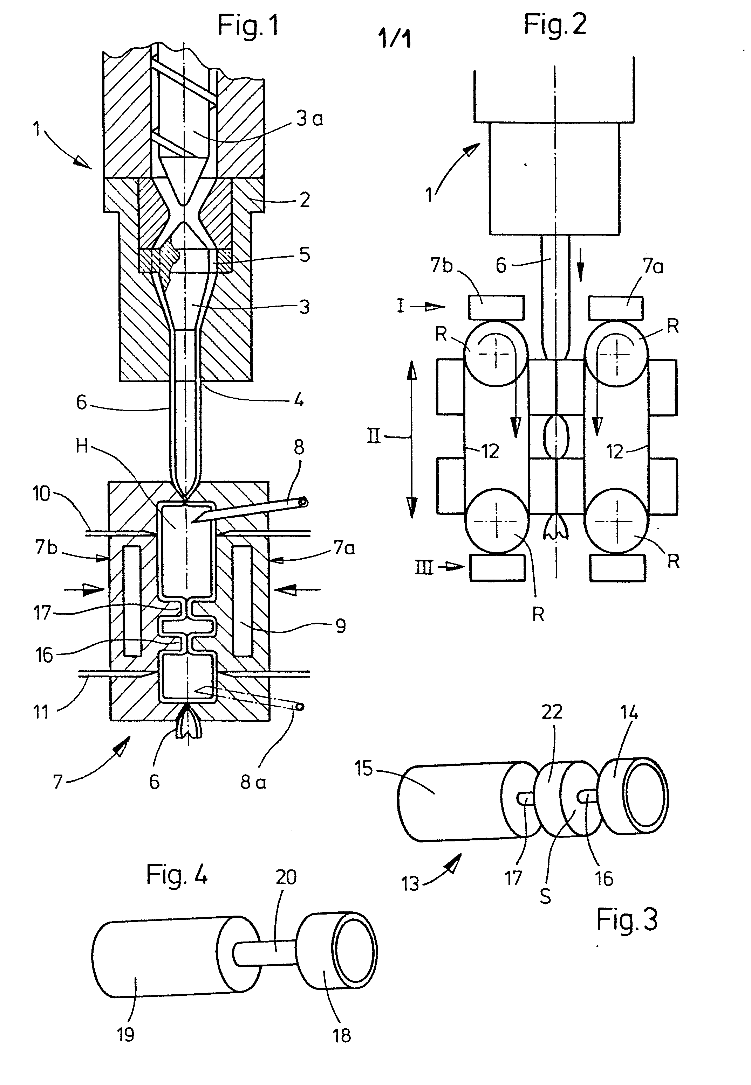

La figure 1 représente une filière à extruder dont l'ensemble est repéré par 1 et qui comprend, d'une manière connue, un couvercle cylindrique 2, un mandrin (torpille) 3 coaxial au couvercle et un orifice de filière 4.   Le mandrin 3 est fixé, par l'intermédiaire des flasques radiales 5, à la paroi interne de la filière.   Le matériau chauffé et donc plastifié arrive, sous l'action d'une vis 3a, vers l'orifice 4 et y émerge sous la forme d'une paraison 6 qui se trouve encore à une température relativement élevée juste inférieure au point de ramollissement.

Comme on le voit sur la figure 1, la portion antérieure du mandrin 3 se prolonge sous forme d'une extension cylindrique 2b de manière à guider la paraison émergente 4 jusqu'à ce que cette dernière entre dans la zone d'un moule de soufflage, dont l'ensemble est repéré par 7 et dont la section est hachurée, et qui est monté pour se déplacer et muni de moyens d'entraînement, de manière à ce que les deux moitiés 7a/7b du moule soient pressées l'une contre l'autre dans le sens de la flèche et puissent aussi être re-séparées l'une de l'autre dans le sens opposé.

Les deux moitiés 7a/7b du moule se ferment dès que la paraison 6 s'est déplacée sur toute la longueur du moule.   Immédiatement après la fermeture du moule, on envoie de l'air comprimé à travers une aiguille 8 dans l'intérieur de la cavité H, de telle sorte que l'entière surface de la paraison soit appliquée contre les surfaces internes des moitiés 7a/7b du moule. Puisque le moule est muni d'un manchon de refroidissement 9, à travers lequel circule un fluide refroidissant, le matériau de la paraison est rapidement refroidit au contact de la paroi interne du moule et prend, à la solidification, la forme désirée donnée par le contour des moitiés du moule.

L'aiguille 8 est disposée et commandée dans un alésage de la moitié 7a du moule de manière à ce que, à un moment convenable, c'est-à-dire immédiatement après la fermeture du moule, elle perce la paraison 6, une soupape étant ouverte et de l'air comprimé étant admis dans la cavité H à travers l'aiguille 8.

Si on n'utilise qu'une aiguille 8, les points de jonction de la coupelle à plombs 15 et de la gaine 14 avec l'amortisseur 22, qui sont repérés par 16 et 17 sur la figure 1, doivent être ouverts pendant l'étape de moulage par soufflage et sont fermés éventuellement par la suite. Pour éviter cette étape de fonctionnement ultérieure, on utilise de préférence une seconde aiguille 8a qui est commandée en synchronisation avec l'aiguille 8 mentionnée en premier et est aussi montée dans un alésage du moule, à une distance axiale de la précédente. Si on utilise ces deux aiguilles, on peut alors donner au moule une forme telle que le point de jonction 16 du matériau de la paraison de plastique immobile soit soudé hermétiquement.

Les portions extrêmes de la pièce moulée par soufflage, qui ont été endommagées par le perçage avec l'aiguille, sont découpées, comme le montre la figure 1.

Deux couples de lames 10 et 11 sont aussi disposés de façon à pouvoir se déplacer dans les moitiés 7a/7b du moule, comme le montre la figure 1, et sont commandés de telle manière qu'ils sectionnent la bourre en deux points après le moulage par soufflage et le refroidissement.    Les couples de lames 10, 11 peuvent se trouver soit, selon la figure 1, à l'intérieur du moule de soufflage ou à l'extérieur du moule de soufflage.    Si le sectionnement est réalisé à l'extérieur du moule, une seule lame suffit.    On peut bien sûr utiliser d'autres éléments de sectionnement tels que rayons laser, jets d'eau, scies et autres.

Du fait des contours des moitiés 7a/7b du moule, que l'on peut voir sur la figure 1, la forme résultante de la bourre 13 est telle que représentée sur la figure 3.    Ainsi, cette bourre possède une gaine cylindrique 14 qui doit recevoir la poudre, une coupelle à plombs 15 cylindrique, quelque peu plus longue et, entre le gaine 14 et la coupelle à plombs 15, un amortisseur 22.    Cet amortisseur 22 est un corps creux cylindrique circulaire pratiquement fermé, rempli d'air, qui possède d'excellentes propriétés d'amortissement du recul qui se produit lors du tir.    Le corps creux est relié à la gaine 14 et à la coupelle à plombs 15 par l'intermédiaire de deux éléments de jonction tubulaires 16, 17 respectivement.

Pour assurer la prévention d'une poussée soudaine des gaz de poudre formés dans la gaine 14, les deux éléments de jonction tubulaires 16 et 17 sont de préférence fermés hermétiquement.    Dans certains cas, il suffit, comme on l'a mentionné, de ne fermer hermétiquement qu'un seul de ces deux éléments de jonction, tandis que l'autre peut être traversé par un alésage.

Le moule représenté sur la figure 1 peut être modifié de diverses manières par les familiers de la technique.    Ainsi, il serait aussi possible de faire l'amortisseur 22 de type à corps creux d'une forme carrée ou d'une forme étoilée au lieu d'une forme cylindrique circulaire.    Il serait aussi possible que les éléments de jonction 16 et 17 aient toute forme creuse désirée que l'on peut obtenir par moulage par soufflage.      Comme on le voit aussi sur la figure 4, on pourrait aussi relier une gaine 18 à une coupelle à plombs 19 par l'intermédiaire d'un organe de jonction cylindrique droit 20.

Le procédé de moulage par soufflage décrit  se distingue avantageusement de la technologie connue du moulage par injection, dans la mesure ou le moule d'injection coûteux et relativement grand mis en jeu devient maintenant superflu et où le procédé de production peut être accéléré considérablement.      En outre, comme il est représenté schématiquement sur la figure 2, le procédé de fabrication peut aussi être effectué en continu de manière simple, au contraire de la technologie existante.      Les moitiés 7a/7b du moule sont prévues ici pour pouvoir se déplacer et sont guidées au moyen d'un entraînement situé sur la périphérie de courroies continues·12 circulant sur des rouleaux R, de manière que les moitiés du moule se déplacent en même temps que la paraison 6 déplacée, lors de la fermeture, et soient, par la suite, après la fin de l'étape de moulage par soufflage, décollées de la paraison pour retourner à leur position de départ. Sur la figure 2, la position de départ est repérée par I, la position de fermeture est repérée par II et la position finale, à partir de laquelle se produit l'inversion du sens, est repérée par III.

Les expressions "moulage par soufflage" et "étape de moulage par soufflage" utilisées dans le présent contexte doivent être comprises de manière à englober tout procédé de fabrication fonctionnant avec une différence de pression gazeuse.      Au lieu de prévoir des aiguilles pour appliquer le gaz sous pression, on pourrait aussi, par exemple, disposer dans le moule plusieurs rainures fines, lesquelles seraient reliées à une source de vide et se termineraient sur la surface interne du moule, en face de la paraison.      En appliquant  un vide, la paraison de plastique serait alors pressée contre les contours du moule, sous l'action de la pression gazeuse régnant dans la cavité.

Le dispositif décrit peut fonctionner verticalement ou horizontalement.

Le matériau de départ employé est un thermo-plastique, de préférence le polyéthylène.

REVENDICATIONS

1. Procédé de fabrication de bourres de plastique monobloc pour cartouches, en particulier les cartouches à plombs, chaque bourre comprenant une gaine qui est destinée à recevoir la poudre, une coupelle à plombs servant à recevoir les plombs et un amortisseur disposé entre la gaine et la coupelle à plombs, caractérisé en ce que l'on forme d'abord une paraison par extrusion et on lui donne ensuite la forme finale désirée par moulage par soufflage puis on la refroidit.

2. Procédé selon la revendication 1, caractérisé en ce que la paraison formée par extrusion est déplacée en continu pendant l'étape de moulage par soufflage et le moule de soufflage entourant la paraison dans la zone de formage est déplacé en même temps que la paraison et replacé dans sa position de départ après la fin de l'étape de moulage par soufflage et après refroidissement.

3. Procédé selon l'une des revendications 1 et 2, caractérisé en ce que du gaz sous pression est envoyé dans la paraison, introduit dans le moule de soufflage, en deux points situés à une distance commune dans la direction axiale de la paraison, de telle manière que la connexion entre la gaine à poudre et la coupelle à plombs puisse être hermétiquement fermée même pendant l'étape de moulage par soufflage et qu'une fermeture ultérieure devienne superflue.

4. Procédé selon l'une des revendications 1 et 2, caractérisé en ce que l'on applique un vide sur la surface externe de la paraison située à l'intérieur du moule de soufflage et la paraison se trouve ainsi appuyée contre les contours du moule de soufflage par la pression gazeuse régnant à l'intérieur de la paraison.

5. Bourre de plastique monobloc pour cartouches, en particulier les cartouches à plombs, fabriquée par le procédé selon l'une des revendications 1 à 4, possédant une gaine qui est destinée à recevoir la poudre, une coupelle à plombs servant à recevoir les plombs et un amortisseur disposé entre la gaine et la coupelle à plombs, caractérisée en ce que l'amortisseur est un corps creux pratiquement fermé rempli d'air.

6.      Bourre de plastique selon la revendication 5, caractérisée en ce que la connexion entre la gaine et la coupelle à plombs est interrompue par un joint étanche en au moins un point situé entre ces deux éléments.

7.      Bourre de plastique selon l'une des revendications 5 et 6, caractérisée en ce que le corps creux possède une face extrême servant de membrane souple, faisant face à la gaine, et une faisant face à la coupelle à plombs, chacune des faces extrêmes étant reliée, respectivement, à la gaine et à la coupelle à plombs par l'intermédiaire d'un élément de jonction de diamètre plus faible, l'élément de jonction adjacent à la gaine étant soudé hermétiquement.

8.      Bourre de plastique selon la revendication 7, caractérisée en ce que les deux éléments de jonction sont des portions tubulaires.

9.      Bourre de plastique selon l'une des revendications 5 ou 6, caractérisée en ce que l'amortisseur est formé comme un corps creux de forme étoilée.

Fig.1

Fig.2

Fig.3

Fig. 4